(19) Europäisches Patentamt / European Patent Office / Office européen des brevets

(11) **EP 4 699 808 A1**

(12) **EUROPEAN PATENT APPLICATION**

(43) Date of publication:
**25.02.2026 Bulletin 2026/09**

(21) Application number: **25193951.8**

(22) Date of filing: **05.08.2025**

(51) International Patent Classification (IPC):
**B41J 2/19** (2006.01)       **B41J 2/18** (2006.01)
**B41J 2/175** (2006.01)       **B41J 2/195** (2006.01)
**C09D 11/322** (2014.01)       **B41J 2/21** (2006.01)

(52) Cooperative Patent Classification (CPC):
**B41J 2/19; B41J 2/175; B41J 2/17556;
B41J 2/17596; B41J 2/18; B41J 2/195;
B41J 2/2117; C09D 11/322**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.08.2024 JP 2024141941**

(71) Applicant: **KYOCERA Document Solutions Inc.
Osaka-shi, Osaka 540-8585 (JP)**

(72) Inventor: **TAKAORI, Yasuko
Osaka-shi, Osaka, 540-8585 (JP)**

(74) Representative: **Kurig, Thomas
Becker Kurig & Partner
Patentanwälte mbB
Bavariastraße 7
80336 München (DE)**

(54) **INKJET RECORDING APPARATUS**

(57)     A degassing device (1) includes an ink tank (32), a recording head (21), a pressure reducing device (62), a circulation flow path (47), and a circulation device (67). The ink tank (32) stores ink. The recording head (32) ejects the ink supplied from the ink tank (32). The pressure reducing device (62) reduces pressure in the ink tank (32). The circulation flow path (47) communicates different positions of the ink tank (32). Thea circulation device (67) circulates the ink through the circulation flow path (47). The ink contains a white pigment.

EP 4 699 808 A1

**Description**

BACKGROUND

The present disclosure relates to an inkjet recording apparatus.

In an inkjet recording apparatus, an ink droplet is ejected through a nozzle of a recording head, if bubbles may be included in the ink, the nozzle of the recording head may be clogged. Therefore, it is desired to suppress an amount of dissolved air in the ink, and a degassing device for removing the air dissolved in the ink has been studied. For example, a degassing device that stirs the ink while the inside of an ink tank is reduced in pressure is known (for example, Japanese Patent No.5030305, JP2019-142189). In the degassing device, a magnetic force is applied to a stirrer in the ink tank from the outside, and the stirrer is rotated by the magnetic force to stir the ink in the ink tank.

In the above degassing device, the ink in the ink tank is stirred, and the ink is degassed near the liquid surface. However, since the stirrer is located at the bottom of the ink tank, when an ink capacity increases, it becomes difficult to replace the ink near the liquid surface where the amount of dissolved gas is small with the ink near the bottom surface where the amount of dissolved gas is large, and degassing efficiency is lowered. Further, when an ink containing a pigment having a high specific gravity such as a white pigment is used, the pigment tends to settle when the ink capacity is increased, and the dispersion stability is lowered.

SUMMARY

A degassing device according to the present disclosure includes an ink tank, a recording head, a pressure reducing device, a circulation flow path, and a circulation device. The ink tank stores ink. The recording head ejects the ink supplied from the ink tank. The pressure reducing device reduces pressure in the ink tank. The circulation flow path communicates different positions of the ink tank. Thea circulation device circulates the ink through the circulation flow path. The ink contains a white pigment.

BRIEF DESCRIPTION OF THE DRAWINGS

FIG. 1 is a schematic view showing an inkjet recording apparatus according to one embodiment of the present disclosure.

FIG. 2 is a schematic view showing an ink supply structure according to the embodiment of the present disclosure.

FIG. 3 is a schematic view showing a circulation pump according to the embodiment of the present disclosure.

FIG. 4 is a graph showing a relationship between a pressure reducing condition and an oxygen saturation of the ink.

FIG. 5 is a view showing an example of degassing operation of a circulation degassing system according to the present embodiment.

FIG. 6 is a diagram showing an example of degassing operation of a stirring degassing system according to the comparative embodiment.

FIG. 7 is a schematic view showing an ink tank in which a circulation flow path is formed, in a first modified example.

FIG. 8 is a schematic view showing the ink tank in which the circulation flow path is formed, in a second modified example.

FIG. 9 is a schematic view showing the ink tank in which the circulation flow path is formed, in a third modified example.

FIG. 10 is a schematic view showing the ink tank in which the circulation flow path is formed, in a fourth modified example.

FIG. 11 is a schematic view showing the ink tank in which the circulation flow path is formed, in a fifth modified example.

FIG. 12 is a schematic view showing the ink tank in which the circulation flow path is formed, in a sixth modified example.

DETAILED DESCRIPTION

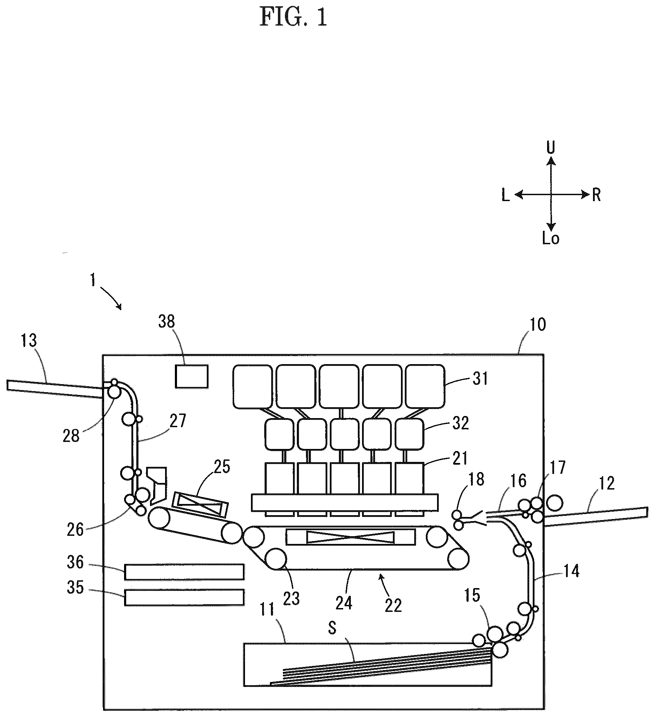

Hereinafter, with reference to the drawings, an inkjet recording apparatus 1 of the present embodiment will be described. FIG. 1 is a schematic view showing the inkjet recording apparatus 1 according to the present embodiment. For convenience of explanation, the front side of the paper surface on which FIG. 1 is drawn is defined as the front side of the inkjet recording apparatus 1, and the left-and-right direction will be described with reference to the direction in which the inkjet recording apparatus 1 is viewed from the front side. The arrows L, R, U, and Lo attached to each figure indicate the left, right, upper, and lower sides of the inkjet recording apparatus 1, respectively.

As shown in FIG. 1, the inkjet recording apparatus 1 is formed so as to perform printing by ejecting ink from each inkjet recording head 21 toward a sheet S as a recording medium. The inkjet recording apparatus 1 includes a box-shaped housing 10 in which various devices are housed. A sheet feeding cassette 11 in which the sheet S is set is housed in the lower portion of the housing 10, and a manual sheet feeding tray 12 on which the sheet S is set by hand is installed on the right side surface of the housing 10. On the upper portion of the left side surface of the housing 10, a sheet discharge tray 13 on which the recorded sheet S is loaded is installed.

In the right side portion in the housing 10, a first conveyance path 14 along which the sheet S is conveyed from the sheet feeding cassette 11 to the recording head 21 provided in the center of the housing 10 is formed. On the upstream side of the first conveyance path 14, a first sheet feeding part 15 which feeds the sheet S from the sheet bundle in the sheet feeding cassette 11 is provided, and a pair of registration rollers 18 which adjusts a feeding timing of the sheet S is provided in the downstream portion of the first conveyance path 14. Further, a sheet feeding path 16 extending from the manual sheet feeding tray 12 is merged with the downstream portion of the first conveyance path 14, and a second sheet feeding part 17 which feeds the sheet S from the sheet bundle on the manual sheet feeding tray 12 is provided on the sheet feeding path 16.

On the downstream side of the pair of registration rollers 18, a conveying device 22 and the recording head 21 provided for each color (for example, black, cyan, magenta, and yellow) are installed. The pair of registration rollers 18 corrects the skew of the sheet S, and then sends the sheet S to the conveying device 22 in accordance with an ink ejecting operation by each recording head 21. In the housing 10, an ink container 31 and an ink tank 32 are provided for each recording head 21. The ink of each ink container 31 is temporarily stored in the ink tank 32, the ink is degassed as necessary, and then the ink is supplied from the ink tank 32 to the recording head 21.

The conveying device 22 is constituted by winding a conveyance belt 24 around a plurality of tension rollers 23 installed below the recording heads 21. On the downstream side of the conveying device 22, a drying device 25 which dries the ink of the sheet S is provided. On the downstream side of the drying device 25, a decurl device 26 which corrects a curl generated on the sheet S by drying the ink is provided. On the downstream side of the decurl device 26, a second conveyance path 27 along which the sheet S is conveyed toward the sheet discharge tray 13 is formed. In the downstream portion of the second conveyance path 27, a sheet discharge part 28 which discharges the recorded sheet S to the sheet discharge tray 13 is provided.

Below the drying device 25, a maintenance unit 35 which cleans the recording heads 21 and a cap unit 36 which caps the recording heads 21 are provided. The maintenance unit 35 is provided with a squeegee-shaped wiping blade, and the wiping blade scrapes the ink remaining on the nozzle surface of the recording head 21. The cap unit 36 is provided with a head cap, and the nozzle surface of the recording head 21 is capped with the head cap. The head cap suppresses drying of the ink in the nozzle. The drying of the ink in the nozzle may be further suppressed by storing a liquid such as a cleaning liquid in the head cap.

Further, the inkjet recording apparatus 1 is provided with a control device 38 for controlling the entire apparatus. The control device 38 may be constituted by a processor or a logic circuit (hardware) formed in an integrated circuit or the like. In the case of a processor, the processor reads and executes a program stored in a memory, and various processes are executed. For example, a CPU (Central Processing Unit) is used as the processor. The memory is constituted by one or more storage devices such as a ROM (Read Only Memory), a RAM (Random Access Memory) or the like depending on the application.

At the time of image recording, the sheet S is fed from the sheet feeding cassette 11 or the manual sheet feeding tray 12 by the first sheet feeding part 15 or the second sheet feeding part 17, respectively, and then sent to the pair of registration rollers 18. In accordance with the ejecting timing of the ink, the sheet S is conveyed from the pair of registration rollers 18 to the conveyance belt 24, the degassed ink is ejected from each recording head 21, and a color image is recorded on the surface of the sheet S. The sheet S is dried by the drying device 25, and the curl of the sheet S is corrected by the decurl device 26. The sheet S is conveyed to the sheet discharge part 28 through the second conveyance path 27, and the recorded sheet S is discharged to the sheet discharge tray 13 by the sheet discharge part 28.

By the way, the liquid surface of the ink comes into contact with air in the ink tank 32, and the dissolving of the air proceeds, and the nozzle of the recording head 21 may be clogged by bubbles in the ink. Therefore, it is desired to appropriately keep an amount of dissolved gas in the ink. For example, a method has been proposed in which by passing the ink through the hollow fiver filter in a state where the pressure of the circumference of the hollow fiber filter is reduced, the air is moved from the wall surface of the hollow fiber to the pressure reduced side to degas the ink. This method requires the expensive hollow fiber filter and requires periodic replacement operations, which increase cost.

In order to prevent the clogging of the nozzle, a system (hereinafter referred to as a stirring degassing system) has been proposed in which the ink is stirred by a stirrer in a state in which the pressure in the ink tank 32 is reduced below an atmospheric pressure to degas the ink. In the stirring degassing system, a magnetic force is applied to the stirrer in the ink tank from the outside, and the stirrer is rotated by the magnetic force to stir the ink in the ink tank 32. When the depth of the ink and the tank diameter are large, the ink is difficult to be stirred, and the degassing efficiency is lowered. As the rotational speed of the stirrer is increased, the ink is easily stirred, but when the rotational speed of the stirrer becomes too high, a loss of synchronization occurs and the rotational sound of the stirrer becomes large.

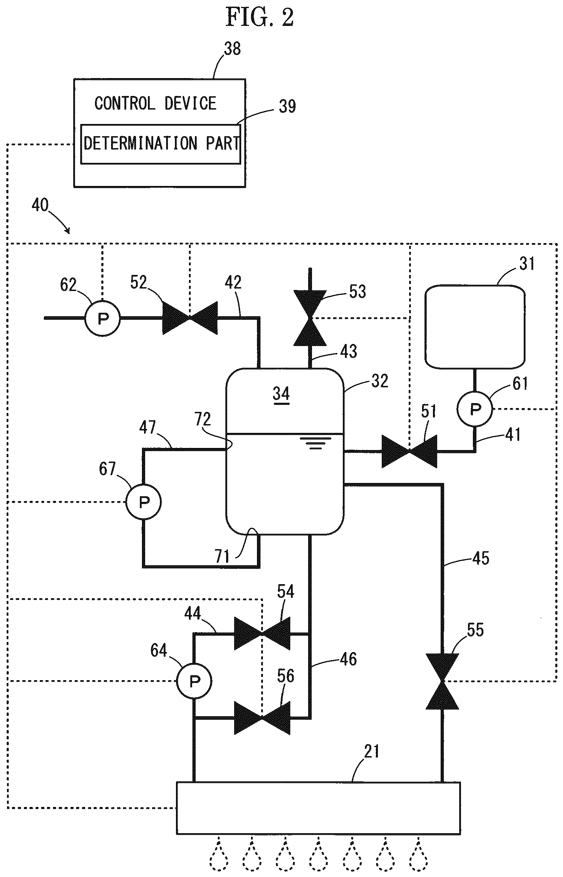

Therefore, in the present embodiment, a system (hereinafter referred to as a circulation degassing system) is adopted in which the ink in the ink tank 32 is circulated through a circulation flow path 47 and degassed while the pressure in the ink tank 32 is reduced to an atmospheric pressure or lower (see FIG. 2). In the circulation degassing system, since the ink circulates in the circulation flow path 47 and the ink tank 32, the ink near the liquid surface where an amount of dissolved air is small is replaced with the ink near the bottom surface where an amount of dissolved air is large, thereby improving the degassing efficiency. Unlike the stirring degassing system, it is not affected by the depth of the ink or the tank diameter, and the driving sound of the circulation pump 67 is suppressed rather than the rotation sound of the stirrer, thereby improving the quietness. In addition, the dispersion stability of the ink containing a pigment having a large specific gravity is improved.

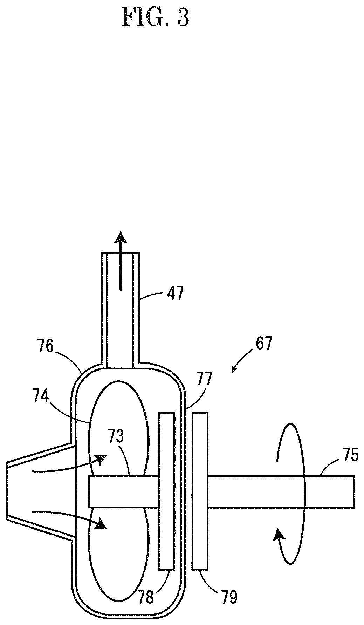

With reference to FIG. 2 and FIG. 3, a degassing device 40 according to the present embodiment will be described. FIG. 2 is a schematic view showing an ink supply structure of this embodiment. FIG. 3 is a schematic view showing a circulation pump 67 according to the present embodiment. The inkjet recording apparatus 1 of the present embodiment is provided with the ink supply structure for each color, and one ink supply structure will be described below.

As shown in FIG. 2, the ink supplied from the ink container 31 through a replenishment flow path 41 is stored in the ink tank 32. A replenishment pump 61 and a replenishment valve 51 are provided on the replenishment flow path 41, and a replenishment of the ink to the ink tank 32 is controlled by the replenishment pump 61 and the replenishment valve 51. An upper space 34 of the ink tank 32A is connected to a reduced-pressure flow path 42 and an atmosphere opening flow path 43. A pressure reducing pump 62 (a pressure reducing device) and a pressure reducing valve 52 are provided on the reduced-pressure flow path 42, and the pressure in the ink tank 32 is reduced by the pressure reducing pump 62 and the pressure reducing valve 52. An atmosphere opening valve 53 is provided on the atmosphere opening flow path 43, and the upper space 34 is opened to the atmosphere by the atmosphere opening valve 53.

The ink is supplied from the ink tank 32 to the recording head 21 through a supply flow path 44, and the ink is recovered from the recording head 21 to the ink tank 32 through a recovery flow path 45. A supply pump 64 and a supply valve 54 are provided on the supply flow path 44, and a recovery valve 55 is provided on the recovery flow path 45. An ink replacement operation and a bubble removal operation in the recording head 21 are controlled by the supply pump 64, the supply valve 54 and the recovery valve 55. The supply flow path 44 is provided with a bypass flow path 46 bypassing the supply pump 64, and the bypass flow path 46 is provided with a bypass valve 56. At a time of printing, the ink is passed through the bypass flow path 46 by the bypass valve 56.

The vicinity of the liquid surface of the ink and the vicinity of the bottom surface of the ink tank 32 are communicated with each other by a circulation flow path 47. On the circulation flow path 47, a circulation pump 67 (a circulation device) is provided, and the ink is circulated through the circulation flow path 47 by the circulation pump 67. An inflow port 72 from the circulation flow path 47 to the ink tank 32 is higher than an outflow port 71 from the ink tank 32 to the circulation flow path 47. Specifically, the outflow port 71 is provided on the bottom surface of the ink tank 32, and the inflow port 72 is provided on the side surface near the liquid surface of the ink tank 32. The replenishment pump 61, the pressure reducing pump 62, the supply pump 64, the circulation pump 67, the replenishment valve 51, the pressure reducing valve 52, the atmosphere opening valve 53, the supply valve 54, the recovery valve 55, and the bypass valve 56 are controlled by the control device 38.

The control device 38 is provided with a determination part 39 which determines whether a degassing operation is necessary in accordance with an ink leaving time. When the determination part 39 determines that degassing of the ink is unnecessary, the degassing operation is restricted. Even if air is re-dissolved by leaving the ink, the ink can be used without degassing within an allowable time. The details of the determination process by the determination part 39 will be described later. In the ink supply structure of the inkjet recording apparatus 1, the degassing device 40 is formed by the ink tank 32, the reduced-pressure flow path 42, the pressure reducing pump 62, the pressure reducing valve 52, the circulation flow path 47, the circulation pump 67, the determination part 39, and the others.

In the standby state of the inkjet recording apparatus 1, the replenishment valve 51, the pressure reducing valve 52, and the supply valve 54 are closed, and the atmosphere opening valve 53, the bypass valve 56, and the recovery valve 55 are opened. The ink is stored in the ink tank 32, and the liquid surface comes into contact with the air in the upper space 34 which is opened to the atmosphere, the air is dissolved in the ink with the passage of time. In the pressure reducing operation, only the pressure reducing valve 52 is opened, and the other valves 51, 53 to 56 are closed. The pressure reducing pump 62 is driven to draw the air from the upper space 34 in the ink tank 32. When the pressure in the inside of the ink tank 32 reaches the target pressure (for example, -50 [kPa]), the pressure reducing pump 62 is stopped.

In the degassing operation, all the valves 51 to 56 are closed, and the circulation pump 67 is driven while the reduced-pressure state in the ink tank 32 is maintained, and the ink in the ink tank 32 is circulated through the circulation flow path 47. The ink near the bottom surface of the ink tank 32 where an amount of dissolved air is large flows out to the circulation flow path 47 through the outflow port 71, and the ink in the circulation flow path 47 flows into the vicinity of the liquid surface in the ink tank 32 through the inflow port 72. The liquid surface of the ink is exposed to the reduced pressure atmosphere to remove the air dissolved in the ink near the liquid surface. The ink near the liquid surface where an amount of dissolved air is small is smoothly replaced with the ink near the bottom surface where an amount of dissolved air is large, and the degassing efficiency is improved.

In this case, since the inside of the ink tank 32 is in a reduced pressure state, a reciprocating pump such as a diaphragm pump is easily affected by the reduced pressure. Therefore, it is preferable that the circulation pump 67 is a pump for delivering the ink by a rotating body. For example, the circulation pump 67 may be a non-positive displacement pump such as a centrifugal pump, a diagonal flow pump, and an axial flow pump, or a positive displacement rotary pump such as a vane pump, a gear pump, and a screw pump. By using these pumps, unlike reciprocating pumps, the ink can be circulated while suppressing the influence of pressure reduction in the ink tank 32.

Generally, the recording head 21 may be included in the circulation flow path of the circulation degassing system, but in this embodiment, the recording head 21 is not included in the circulation flow path 47. That is, the circulation flow path 47 is a dedicated flow path for degassing provided separately from the flow path for supplying the ink to the recording head 21. Since the recording head 21 is not included in the circulation flow path 47, the possibility that the meniscus formed in the nozzle of the recording head 21 is destroyed by the pressure reduction at the time of degassing and the outside air enters the recording head 21 can be reduced.

As shown in FIG. 3, a power can be transmitted between a pump shaft 73 of the circulation pump 67 and a motor shaft 75 across a partition wall 77 in a non-contact manner. A pump casing 76 is formed in the middle of the circulation flow path 47, and the pump shaft 73 with an impeller 74 is housed in the pump casing 76. A motor (not shown) is provided outside the circulation flow path 47. Disks 78 and 79 are provided at the ends of the pump shaft 73 and the motor shaft 75, and the disks 78 and 79 face each other across the partition wall 77 of the pump casing 76. Magnets (not shown) having S poles and N poles alternately arranged in the circumferential direction are disposed on the opposing surfaces of the disks 78 and 79.

The pump shaft 73 and the motor shaft 75 are magnetically coupled (magnet coupling), and the power is transmitted from the motor shaft 75 to the pump shaft 73 using a magnetic force. The impeller 74 in the pump casing 76 can be rotated while the pump casing 76 is liquid-tightly sealed without penetrating the motor shaft 75 through the pump casing 76. Since the space between the disk 78 of the pump shaft 73 and the disk 79 of the motor shaft 75 is partitioned by the partition wall 77 of the pump casing 76, even if a pressure difference occurs between the inside and the outside of the pump casing 76 when the pressure in the ink tank 32 is reduced, ink leakage caused by the pressure difference is surely prevented.

As shown in FIG. 2, during the ink replacement operation in the recording head 21, the replenishment valve 51, the pressure reducing valve 52, and the bypass valve 56 are closed, and the atmosphere opening valve 53, the supply valve 54, and the recovery valve 55 are opened. The supply pump 64 is driven to supply the ink from the ink tank 32 to the recording head 21 through the supply flow path 44, and the ink is recovered from the recording head 21 to the ink tank 32 through the recovery flow path 45. By circulating the ink between the recording head 21 and the ink tank 32, the ink having an increased viscosity in the recording head 21 is replaced, and bubbles are removed from the recording head 21.

During the printing operation by the recording head 21, the replenishment valve 51, the pressure reducing valve 52, and the supply valve 54 are closed, and the atmosphere opening valve 53, the bypass valve 56, and the recovery valve 55 are opened. That is, during the printing operation, the ink tank 32 is released to the atmosphere and has the atmospheric pressure. During the printing operation, the pressure in the ink tank 32 is not reduced such that substantial degassing does not occur. Every time when the ink is ejected from the recording head 21, the ink is supplied from the ink tank 32 to the recording head 21 through the bypass flow path 46 and the recovery flow path 45. In some cases, the ink is replenished in the middle of the ink replacement operation, printing operation, or the like. During the ink replenishment operation, the replenishment valve 51 is opened and the replenishment pump 61 is driven. The ink is replenished from the ink container 31 to the ink tank 32 through the replenishment flow path 41 by driving the replenishment pump 61.

FIG. 1 and the others are schematically drawn, and the recording head 21 is actually disposed above the ink tank 32. A negative pressure is applied to the ink in the recording head 21 by a head difference from the ink in the ink tank 32, and a meniscus is formed in the nozzle of the recording head 21 by the negative pressure. After the ink is ejected from the recording head 21, the surface tension of the ink acts to reduce the surface area of the meniscus, and the resulting negative pressure draws the reduced amount of the ink from the ink tank 32 into the recording head 21. The recovery valve 55 may be closed, and the ink may be supplied to the recording head 21 only from the bypass flow path 46.

If the pressure in the ink tank 32 is reduced to the extent that substantial degassing occurs in a state where the recording head 21 and the ink tank 32 are connected, the meniscus of the nozzle may be destroyed. Even if the meniscus is not destroyed, there is a risk that the shape of the meniscus in the nozzle is changed compared with the case where the ink tank 32 is released to the atmosphere, and the ejecting characteristics of the ink is changed. In the present embodiment, since the pressure in the ink tank 32 is not reduced so as not to cause substantial degassing during the printing operation, the meniscus in the nozzle of the recording head 21 is not destroyed, and since its shape is not changed, the ejection characteristic is not changed.

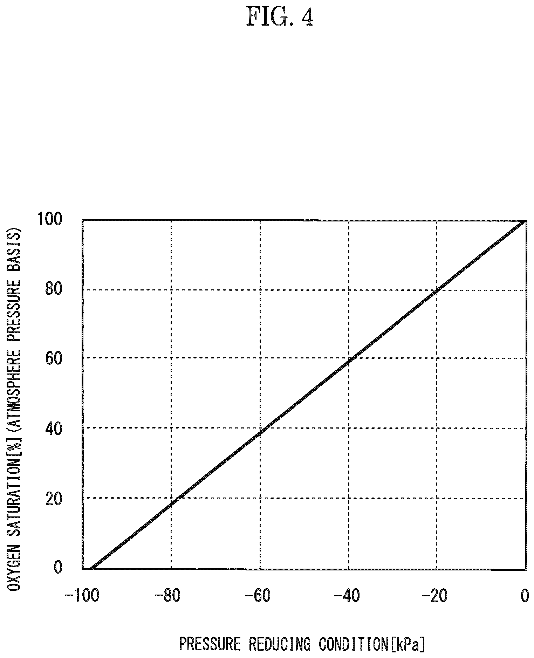

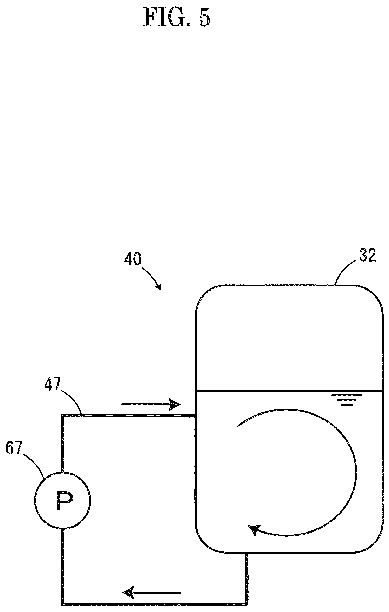

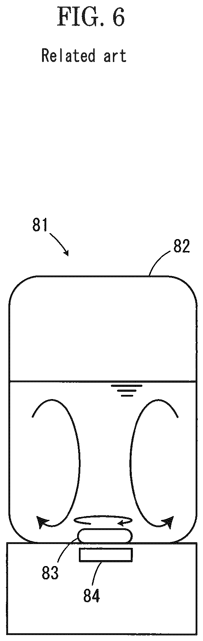

Hereinafter, a degassing performance of the circulation degassing system and the stirring degassing system will be described with reference to FIG. 4 to FIG. 6 and Table 1 to Table 8. FIG. 4 is a graph showing a relationship between a pressure reducing condition of and an oxygen saturation of the ink. FIG. 5 is a view showing an example of degassing operation of the circulation degassing system according to the present embodiment. FIG. 6 is a view showing an example of degassing operation of the stirring degassing system of the comparative example. It should be noted that a measurement method of the oxygen saturation and an evaluation method of image quality in Tables 1 to 8 are performed in the same manner unless otherwise mentioned.

The above-described degassing device 40 employs a reduced-pressure degassing system in which the inside of the ink tank 32 is reduced in pressure to remove air. In the reduced-pressure degassing system, an amount of dissolved air in the liquid converges to a saturated amount of dissolved air according to environmental conditions such as atmospheric pressure and liquid temperature, and the amount of dissolved air decreases when the atmospheric pressure reduces or the temperature increases. In many cases, an amount of dissolved oxygen is used instead of the amount of dissolved air, and in this embodiment, the degassing performance is explained by using the oxygen saturation obtained from the following equation (1). As shown in FIG. 4, the oxygen saturation decreases with the pressure reducing, but since the ink is degassed on the liquid surface, the ability to carry the ink having a high oxygen saturation to the liquid surface is related to the degassing performance.

An oxygen saturation = an amount of dissolved oxygen/an amount of saturated dissolved oxygen at atmospheric pressure $\times$ 100.                                                                    Equation (1)

As shown in FIG. 5, in the degassing device 40 of the circulation degassing system, the air dissolved in the ink is removed near the liquid surface of the reduced pressure ink tank 32, so that the oxygen saturation of the ink near the liquid surface is low and the oxygen saturation of the ink near the bottom surface is high. By driving the circulation pump 67, the ink near the bottom surface is sent to the vicinity of the liquid surface through the circulation flow path 47, so that a flow of the ink is formed between the vicinity of the liquid surface and the vicinity of the bottom surface, and an effective degassing is performed. In the circulation degassing system, the degassing efficiency is maintained by sending the ink near the bottom surface to the liquid surface even when the ink capacity increases due to the increase in the ink depth or the tank diameter.

On the other hand, as shown in FIG. 6, in the degassing device 81 of the stirring degassing system, a stirrer 83 is placed on the bottom surface of the reduced pressure ink tank 82. A magnet 84 is provided below the ink tank 82, and the stirrer 83 is rotated by the magnetic force of the magnet 84 to stir the ink. By stirring the ink, the ink near the bottom surface is carried near the liquid surface and degassed. However, in the stirring degassing system, the stirrer 83 is placed at the center of the bottom surface of the ink tank 82, and the influence of stirring is strong at the center of the bottom surface, but is weakened near the liquid surface and the periphery. Therefore, if the ink depth or the tank diameter increases and the ink capacity increases, the degassing efficiency is lowered.

Table 1 shows an effect of the ink depth on the oxygen saturation and the image quality. Here, the effects of the ink depth and the tank diameter on the oxygen saturation and the image quality were confirmed in the circulation degassing system and the stirring degassing system. The viscosity of the ink was 7 [mPa·s], the temperature of the ink was 25 [°C], the tank diameters of the ink tanks 32 and 82 were 60 [mm], and the depth of the ink was changed gradually from 14.1 [mm] to 70.7 [mm]. In the circulation degassing system, the circulation flow rate of the ink was 770 [ml/min]. In the stirring degassing system, the capsule-type stirrer 83 having a diameter of 8 [mm] and a length of 35 [mm] was used, and the rotation speed of the stirrer 83 (magnet 84) was 560 rpm.

Then, the oxygen saturation and the image quality were confirmed 10 minutes after the ink tanks 32 and 82 were reduced to -50 [kPa]. The oxygen saturation was measured using a well-known measuring instrument, and the image quality was evaluated according to the following criteria based on the number of pins in which ejecting defects such as slippage and misregistration occurred on a single line printed by the line head of about 2000 pins.

[Image Quality Evaluation Criteria]

O: No slippage or misregistration.

Δ: The number of pins causing slippage or misregistration was 1 pin or more and 10 pins or less.

×: The number of pins causing slippage or misdirection was 10 or more.

It should be noted that this evaluation criteria is one indicator, and × does not indicate that it is not suitable for practical use.

[Table 1]

| | | DEPTH OF INK [mm] | | | | |
|---|---|---|---|---|---|---|
| | | 14.1 | 28.3 | 42.4 | 56.6 | 70.7 |
| CIRCULATION DEGASSING SYSTEM | OXYGEN SATURATION[%] | 42.8 | 43.5 | 45.9 | 46.9 | 48.5 |
| | IMAGE QUALITY | ○ | ○ | ○ | ○ | ○ |
| STIRRING DEGASSING SYSTEM | OXYGEN SATURATION[%] | 45.5 | 54.0 | 78.5 | 90.7 | 94.5 |
| | IMAGE QUALITY | ○ | ○ | × | × | × |

Table 2 shows the effect of the tank diameter on the oxygen saturation and the image quality. The viscosity of the ink was set to 7 [mPa·s], the temperature of the ink was set to 25 [°C], the depth of the ink was set to 28 [mm], and the tank diameters of the ink tanks 32, 82 were gradually changed from 45 [mm] to 120 [mm].

[Table 2]

| | | DIAMETER OF INK TANK [mm] | | | | | |
|---|---|---|---|---|---|---|---|
| | | 45 | 60 | 75 | 90 | 105 | 120 |
| CIRCULATION DEGASSING SYSTEM | OXYGEN SATIRATION[%] | 45.3 | 46.9 | 54.9 | 57.7 | 60.6 | 62.1 |
| | IMAGE QUALITY | ○ | ○ | ○ | ○ | Δ | Δ |
| STIRRING DEGASSING SYSTEM | OXYGEN SATURATION[%] | 70.7 | 90.7 | 85.5 | 88.6 | 92.0 | 92.7 |
| | IMAGE QUALITY | Δ | × | × | × | × | × |

As shown in Tables 1 and 2, in the circulation degassing system, the oxygen saturation is maintained in a low state even if the ink depth and the tank diameter were changed. On the other hand, as shown in Table 1, in the stirring degassing system, the degassing performance is lowered when the ink depth exceeds 40 [mm], and the degassing does not proceed when the ink depth exceeds 70 [mm]. As shown in Table 2, in the stirring degassing system, the degassing performance is low even when the tank diameter is 45 [mm], and the degassing does not proceed when the tank diameter exceeds 60 [mm]. Thus, the circulation degassing system achieves better degassing performance than the stirring degassing system.

As described above, since the ability to carry the ink having a high oxygen saturation to the liquid surface is related to the degassing performance, the circulation flow rate of the ink becomes important in the circulation degassing system, and the rotational speed of the stirrer 83 becomes important in the stirring degassing system. Therefore, the effect of the circulating flow rate of the ink on the oxygen saturation and the image quality was confirmed in the circulation degassing system, and the effect of the rotational speed of the magnet 84 on the oxygen saturation and the image quality was confirmed in the stirring degassing system. In the stirring degassing system, the stirrer 83 in the ink tank 82 is rotated by the magnetic force of the external magnet 84, and since it is difficult to control the rotational speed of the stirrer 83 itself, the rotational speed of the magnet 84 is used instead of the rotational speed of the stirrer 83.

Table 3 shows the effect of the circulating flow rate of the ink on the oxygen saturation and the image quality. In the circulation degassing system, the viscosity of the ink was set to 7 [mPa·s], the temperature of the ink was set to 25 [°C], the tank diameter of the ink tank 32 was set to 60 [mm], the depth of the ink was set to 28 [mm], and the circulation flow rate of the ink was changed gradually from 41 [ml/min] to 2018 [ml/min]. As shown in Table 3, in the circulation degassing system, the degassing performance is improved by increasing the circulation flow rate of the ink. When the circulation flow rate of the ink is 53 [ml/min] or more, the degassing performance is obtained, and it is desirable that the circulation flow rate of the ink is 440 [ml/min] or more.

[Table 3]

| CIRCULATION FLOW RATE [ml/mln] | OXYGEN SATURATION | IMAGE QUALITY | WHITENESS | | | |
|---|---|---|---|---|---|---|
| | | | PARTICLE SIZE 200 [nm] | PARTICLE SIZE 280 [nm] | PARTICLE SIZE 350 [nm] | PARTICLE SIZE 400 [nm] |
| 41 | 77.1 | × | × | × | × | × |
| 53 | 72.9 | Δ | × | × | × | × |
| 67 | 69.5 | Δ | × | × | × | × |
| 95 | 70.1 | Δ | × | × | × | × |
| 168 | 66.9 | Δ | × | × | × | × |
| 255 | 65.3 | Δ | × | × | × | × |
| 315 | 63.5 | Δ | ○ | × | × | × |
| 386 | 62.0 | Δ | ○ | × | × | × |
| 440 | 53.4 | ○ | ○ | ○ | × | × |
| 497 | 52.4 | ○ | ○ | ○ | ○ | × |
| 750 | 48.1 | ○ | ○ | ○ | ○ | × |
| 1052 | 45.0 | ○ | ○ | ○ | ○ | × |
| 1380 | 43.5 | ○ | ○ | ○ | ○ | × |
| 2018 | 42.1 | ○ | ○ | ○ | ○ | × |

Table 3 shows the effect of circulation flow rate and particle size on a whiteness of the white pigment ink. In the case where an ink containing a pigment having a high specific gravity is used, as the ink capacity increases, the pigment tends to settle and the dispersion stability is lowered. Here, the pigment having a high specific gravity is a white pigment having a higher specific gravity than the black, cyan, magenta and yellow pigments frequently used in the inkjet printing. For example, titanium oxide or the like is used as the white pigment, and it has a property that it easily settles.

The white pigment ink is used for forming a white base on a transparent film or for forming white characters on a dark film. Since the film is not liquid absorbent, the ink is required to dry quickly. When a quick drying ink is used, it is desirable to use a circulation type recording head 21 as in the present embodiment in order to prevent clogging of the nozzle.

In the experiment, four kinds of white pigments having different particle sizes were used to form an image with an image density of 100%, and the whiteness was evaluated. The white pigment was titanium oxide. The particle sizes were 200, 280, 350, and 400 [nm]. With the ink depth of 70.4 [mm], the tank diameter of 90 [mm], and the circulation flow rate of 1052 [ml/min], an image printed after degassing for 10 minutes by the circulation degassing system was defined as a reference, the change rate $\Delta E$ of the whiteness was measured using a colorimeter, and the whiteness was evaluated according to the following evaluation criteria.

[Evaluation criteria for whiteness]

o : $\Delta E < 3$,
× : $\Delta E \geqq 3$.

It should be noted that this evaluation standard is one indicator, and × does not indicate that it is not suitable for practical use.

As shown in Table 3, in the circulation degassing system, the whiteness was improved by increasing the circulation flow rate of the ink. When the particle size was 200, 280, and 350 [nm], the evaluation criteria for whiteness was satisfied when the circulation flow rate was 315, 440, and 497 [ml/min] or more, respectively. When the particle size was 400 [nm], the evaluation criteria was not satisfied even if the circulation flow rate was maximized. However, in practice, it has been found that a sufficient degree of whiteness cannot be obtained unless the particle size is 250 [nm] or more. Therefore, from the results of the present experiment, the recommended particle size (average primary particle size) is 250 [nm] or more and 350 [nm] or less.

Table 4 shows the effect of the rotational speed of the magnet 84 on the oxygen saturation and the image quality. In the stirring degassing system, the viscosity of the ink was set to 7 [mPa·s], the temperature of the ink was set to 25 [°C], the tank diameter of the ink tank 82 was set to 60 [mm], the depth of the ink was set to 28 [mm], and the rotation speed of the magnet 84 was changed gradually between 218 [rpm] and 825 [rpm]. As shown in Table 4, in the stirring degassing system, the degassing performance was improved by increasing the rotational speed of the magnet 84. Although the degassing performance can be obtained when the rotational speed of the magnet 84 was 560 [rpm] or more, a loss of synchronization occurred when the rotational speed of the magnet 84 exceeded 600 [rpm], and it is difficult to adopt the stirring degassing system in an actual machine.

[Table 4]

| ROTATIONAL SPEED [rpm] | OXYGEN SATURATION [%] | IMAGE QUALITY | LOSS OF SYNCRONIZATION |
|---|---|---|---|
| 218 | 82.1 | × | ○ |
| 323 | 80.9 | × | ○ |
| 438 | 76.9 | × | ○ |
| 560 | 71.5 | △ | ○ |
| 694 | 50.7 | ○ | △ |
| 825 | - | - | × |

Table 5 shows the effect of pressure reducing conditions on the oxygen saturation and the image quality. Since the pressure reducing condition of the ink tank 32 is related to the degassing performance, the effect of changing the pressure reducing condition in the circulation degassing system on the oxygen saturation and the image quality was confirmed. The viscosity of the ink was set to 7 [mPa·s], the temperature of the ink was set to 25 [°C], the tank diameter of the ink tank 32 was set to 60 [mm], the depth of the ink was set to 28 [mm], and the circulation flow rate of the ink was set to 770 [ml/min], and the pressure reducing condition was changed gradually from 0 [kPa] to -90 [Pa]. The degassing performance was confirmed after 30 minutes when the progress of the degassing started to slow down. As shown in Table 5, the degassing performance was obtained when the pressure was reduced to -30 [kPa] or less, and it is desirable that the pressure was reduced to -50 [kPa] or less.

[Table 5]

| PRESSURE REDUCING CONDITION [kPa] | OXYGEN SATURATION [%] | IMAGE QUALITY |
|---|---|---|
| 0 | 100.0 | × |
| -10 | 89.0 | x |
| -20 | 80.8 | × |
| -30 | 72.8 | △ |
| -40 | 65.0 | △ |
| -50 | 58.2 | ○ |
| -60 | 53.5 | ○ |
| -70 | 47.7 | ○ |
| -80 | 39.7 | ○ |
| -90 | 31.9 | ○ |

Table 6 shows the effect of the viscosity of the ink during the degassing on the oxygen saturation and the image quality in the circulation degassing system. The ink temperature was 25 [°C], the tank diameter of the ink tank 32 was 60 [mm], and the ink depth was 28 [mm], and a plurality of the inks having different viscosities from 1 [mPa·s] to 13.7 [mPa·s] were prepared. Then, air was sufficiently dissolved in the ink and then degassed, and the degassing performance was confirmed when degassing times were set to 0, 10, 20, 30, and 60 minutes. The viscosity of the ink was a value measured using a ball drop type viscometer (error ±0.5%) in accordance with JISZ8803.

As shown in Table 6, the ink having a low viscosity was easy to be degassed, and the ink having a high viscosity was difficult to be degassed. However, if the viscosity of the ink was less than 2 [mPa·s], the ejection performance of the line head was not stable, and even if the ink was sufficiently degassed, the misregistration tended to occur on the image. When the viscosity of the ink exceeded 10 [mPa·s], a sufficient image quality could not be obtained unless the degassing time of 20 minutes or more was secured. In order to suppress deterioration of ejection performance due to a low viscosity of the ink and deterioration of image quality due to a high viscosity of the ink, it is desirable that the viscosity of the ink is 2 [mPa·s] or more and 10 [mPa·s] or less.

[Table 6]

| DEGASSING TIME [min] | | VISCOSITY [mPa · s] | | | | | |
|---|---|---|---|---|---|---|---|
| | | 1 | 2 | 3 | 7 | 10 | 13.7 |
| 0 | OXYGEN SATURATION[%] | 99.4 | 99.9 | 99.9 | 99.2 | 98.0 | 99.7 |
| | IMAGE QUALITY | × | × | × | × | × | × |
| 10 | OXYGEN SATURATION[%] | 32.9 | 34.4 | 35. 6 | 43. 1 | 52.9 | 67.8 |
| | IMAGE QUALITY | △ | ○ | ○ | ○ | ○ | △ |
| 20 | OXYGEN SATURATION[%] | 32.6 | 34.0 | 35.3 | 42.4 | 47.6 | 60. 7 |
| | IMAGE QUALITY | △ | ○ | ○ | ○ | ○ | △ |
| 30 | OXYGEN SATURATION[%] | 32.5 | 33.3 | 34. 9 | 39.4 | 45.8 | 58.0 |
| | IMAGE QUALITY | △ | ○ | ○ | ○ | ○ | ○ |
| 60 | OXYGEN SATURATION[%] | 32.1 | 31.9 | 33.4 | 35.1 | 39.2 | 50.5 |
| | IMAGE QUALITY | △ | ○ | ○ | ○ | ○ | ○ |

Table 7 shows the effect of the viscosity of the ink when the ink was left unattended, on the oxygen saturation and the image quality in the circulation degassing system. The ink temperature was 25 [°C], the tank diameter of the ink tank 32 was 60 [mm], and the ink depth was 28 [mm], and a plurality of the inks having different viscosities from 1 [mPa·s] to 13.7 [mPa·s] were prepared. After the inside of the ink tank 32 was sufficiently degassed, it was left unattended in a state where the inside of the ink tank 32 is returned to an atmospheric pressure, and the degassing performance after the lapse of 0 hours, 4 hours, 8 hours, 24 hours, and 32 hours was confirmed. The result shows how the air is re-dissolved according to the viscosity of the ink.

As shown in Table 7, when the viscosity of the ink became low, the air was easily re-dissolved, and when the viscosity of the ink became high, the air was hardly re-dissolved. When the viscosity of the ink was less than 2 [mPa·s], the oxygen saturation increased and the image quality deteriorated due to the re-dissolution of the air into the ink even if the ink was left untouched for a short time. As the viscosity of the ink increased, the re-dissolution of the air into the ink was suppressed, so that the degassing operation of the ink tank 32 needed not be performed depending on the leaving time of the ink. For example, when the viscosity of the ink was 3 [mPa·s], the ink was not degassed if the ink was left untouched for 4 hours or less.

[Table 7]

| LEAVING TIME [h] | | OXYGEN SATURATION[%] | | | | | |
|---|---|---|---|---|---|---|---|
| | | 1 | 2 | 3 | 7 | 10 | 13.7 |
| 0 | OXYGEN SATLOTION[%] | 33.7 | 34.1 | 35.2 | 42.1 | 43.8 | 44.3 |
| | IMAGE QUALITY | △ | ○ | ○ | ○ | ○ | ○ |
| 4 | OXYGEN SATURATION[%] | 72.4 | 60.8 | 51.3 | 53.5 | 52. 2 | 51.3 |
| | IMAGE QUALITY | × | △ | ○ | ○ | ○ | ○ |
| 8 | OXYGEN SATURATION[%] | 92.6 | 80.2 | 73.6 | 65.9 | 59.2 | 56.1 |
| | IMAGE QUALITY | × | × | △ | △ | ○ | ○ |
| 24 | OXYGEN SATURATION[%] | 99.9 | 95.8 | 94.3 | 89.3 | 75.2 | 63.7 |
| | IMAGE QUALITY | x | × | × | × | × | △ |

(continued)

| LEAVING TIME [h] | | OXYGEN SATURATION[%] | | | | | |
|---|---|---|---|---|---|---|---|
| | | 1 | 2 | 3 | 7 | 10 | 13.7 |
| 32 | OXYGEN SATURATION[%] | 99.7 | 98.8 | 97.0 | 93. 7 | 83.4 | 66.1 |
| | IMAGE QUALITY | × | × | × | × | × | Δ |

In this case, the control device 38 (see FIG. 2) is provided with a timer, and the leaving time of the ink is measured by the timer. The viscosity of the ink can be estimated from one or more parameters such as the air pressure, the temperature of the ink, and the elapsed time since the last printing. Therefore, conversion information indicating the correspondence between each parameter and the viscosity of the ink is stored in the determination part 39, and the viscosity of the ink is estimated based on each parameter. Further, conversion information showing the correspondence between the viscosity of the ink and the allowable time is stored in the determination part 39, and the allowable time is set based on the viscosity of the ink. The allowable time is a time during which the printing is allowed without degassing even if the ink is left untouched.

When the leaving time of the ink is within the allowable time, the determination part 39 determines that the degassing is unnecessary because the oxygen saturation is low, and the degassing operation is restricted. When the leaving time of the ink exceeds the allowable time, the determination part 39 determines that the degassing is necessary because the oxygen saturation is high, and the degassing operation is performed. Map data, a lookup table, a conversion formula, or the like are used as the conversion information indicating the correspondence between each parameter and the viscosity of the ink, and the conversion information indicating the correspondence between the viscosity of the ink and the allowable time. These map data, lookup tables, and conversion formulas are obtained experimentally, empirically, and theoretically in advance.

Table 8 shows the change in the circulation flow rate when the viscosity was changed in the circulation degassing system. Here, a centrifugal pump was used as the circulation pump 67. In this embodiment, a power was transmitted from the motor to the impeller 74 by the magnet coupling. If the viscosity of the ink becomes too high, the loss of synchronization of the magnet coupling occurs. On the other hand, if the viscosity of the ink becomes excessively low, a torque acting on the motor shaft 75 becomes light, and the motor becomes hot, resulting in a secondary adverse effect. If the viscosity of the ink is 2 [mPa·s] or more and 10 [mPa·s] or less, such the problem occurring in the circulation pump 67 can be prevented.

[Table 8]

| VISCOSITY [mPa • s] | FLOW RATE CHANGE [%] |
|---|---|
| 1 | 100 |
| 3 | 84.1 |
| 7 | 54.3 |
| 13.4 | 32.3 |
| 20 | 17. 6 |
| 25 | × |

The inkjet recording apparatus 1 according to the present embodiment described above includes the ink tank 32 in which the ink is stored, the recording head 21 which ejects the ink supplied from the ink tank 32, the pressure reducing device (the pressure reducing pump 62) which reduces the pressure in the inside of the ink tank 32, the circulation flow path 47 which communicates different positions of the ink tank 32, and the circulation device (the circulation pump 67) which circulates the ink through the circulation flow path 47, wherein the ink contains a white pigment. According to this configuration, the air dissolved in the ink near the liquid surface exposed to the reduced pressure atmosphere is removed. The ink in the ink tank 32 is circulated through the circulation flow path 47, and the ink near the liquid surface where an amount of dissolved air is small is replaced with the ink near the bottom surface where an amount of dissolved air is large. Therefore, the degassing efficiency can be improved even if the capacity of the ink is large. When the degassing device 40 is used in the inkjet recording apparatus 1, clogging of the recording head 21 due to air bubbles in the ink is effectively suppressed, thereby improving the image quality.

Further, according to the inkjet recording apparatus 1 according to the present embodiment, the dispersion stability of the white pigment contained in the ink can be improved even if the capacity of the ink is large. The ink containing the white pigment is used to form a white base on a transparent film, or to form white characters on a dark film, and is highly useful. Therefore, the present disclosure is suitable for the inkjet recording apparatus 1 using the ink containing a white pigment, and the dispersion stability of the white pigment contained in the ink can be improved even if the capacity of the ink is large. Although titanium oxide is shown as an example of the white pigment in the present embodiment, the dispersion stability can be improved even when zinc oxide, lead white (basic lead carbonate), and litopon (barium sulfate, zinc sulfide) are used as the white pigment.

In the inkjet recording apparatus 1 according to the present embodiment, since the white pigment is titanium oxide, the dispersion stability of titanium oxide contained in the ink can be improved.

According to the inkjet recording apparatus 1 according to the present embodiment, since the average primary particle diameter of the titanium oxide is 250 [nm] or more and 350 [nm] or less, a high degree of whiteness can be obtained.

In addition, according to the inkjet recording apparatus 1 according to the present embodiment, since the circulation device is a pump (the circulation pump 67) for delivering a liquid by a rotating body (the impeller 74), the ink can be circulated while suppressing the influence of pressure reduction in the ink tank 32.

According to the inkjet recording apparatus 1 according to the present embodiment, in the circulation device, the power can be transmitted between the pump shaft 73 of the pump and the motor shaft 75 across the partition wall 77 in a non-contact manner. According to this configuration, since the power can be transmitted while the circulation pump 67 is liquid-tightly sealed, the ink leakage can be reliably prevented even if a pressure difference occurs between the inside and the outside of the circulation pump 67 due to the pressure reduction of the ink tank 32.

In addition, according to the inkjet recording apparatus 1 according to the present embodiment, in the circulation device, the power can be transmitted between the pump shaft 73 and the motor shaft 75 in a non-contact manner by using magnetic force. According to this configuration, since the power can be transmitted while the circulation pump 67 is liquid-tightly sealed, the ink leakage can be reliably prevented even if a pressure difference occurs between the inside and the outside of the circulation pump 67 due to the pressure reduction of the ink tank 32.

Further, according to the inkjet recording apparatus 1 according to the present embodiment, since the viscosity of the ink is 2 [mPa·s] or more and 10 [mPa·s] or less, it is possible to suppress deterioration of the ejection performance due to the low viscosity of the ink and deterioration of the image quality due to the high viscosity of the ink.

[Modified Example] The above embodiment may be modified as follows.

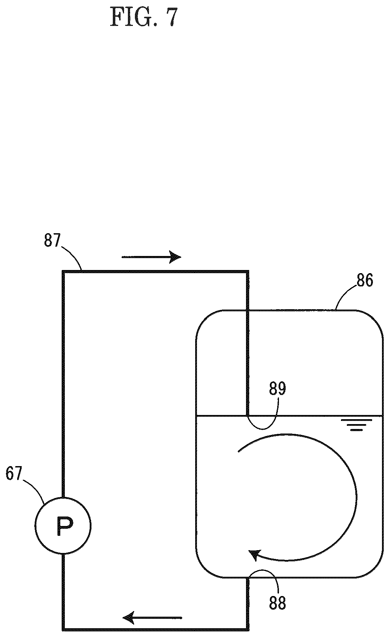

FIG. 7 to FIG. 12 are schematic views showing modified examples 1 to 6. In the above embodiment, the circulation flow path 47 is formed so as to communicate the side surface near the liquid surface of the ink tank 32 with the bottom surface of the ink tank 32, but the circulation flow path 47 may be formed so as to communicate with different positions of the ink tank 32.

In the modified example 1 shown in FIG. 7, a bottom surface position and a liquid surface position of an ink tank 86 are communicated with each other by a circulation flow path 87. An outflow port 88 from the ink tank 86 to the circulation flow path 87 is opened on the bottom surface of the ink tank 86, and an inflow port 89 from the circulation flow path 87 to the ink tank 86 is in contact with the liquid surface of the ink. Even in such a configuration, the ink near the liquid surface where an amount of dissolved air is small is smoothly replaced with the ink near the bottom surface where an amount of dissolved air is large, thereby improving the degassing efficiency.

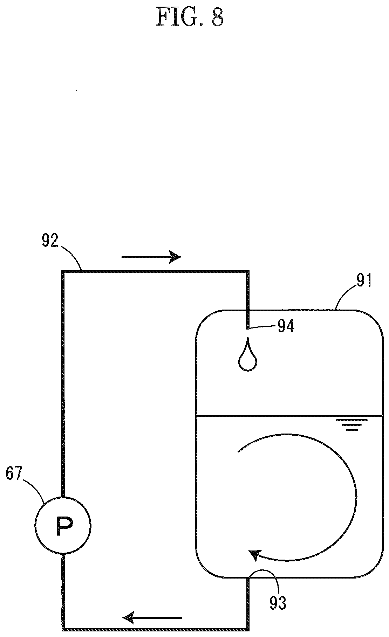

In the modified example 2 shown in FIG. 8, a bottom surface position of an ink tank 91 and an upper position above the liquid surface are communicated with each other by a circulation flow path 92. An outflow port 93 from the ink tank 91 to the circulation flow path 92 is opened on the bottom surface of the ink tank 91, and an inflow port 94 from the circulation flow path 92 to the ink tank 91 is exposed above the liquid surface. In this configuration, the ink is exposed to a reduced pressure atmosphere during dropping from the inflow port 94, and the air dissolved in the ink is easily removed, thereby improving the degassing efficiency.

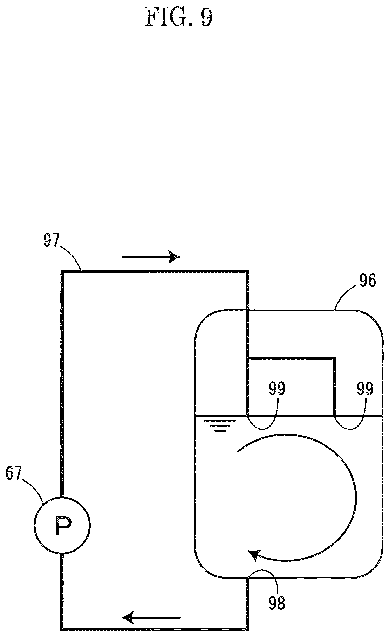

In the modified example 3 shown in FIG. 9, a bottom surface position of an ink tank 96 and two liquid surface positions are communicated with each other by a circulation flow path 97. An outflow port 98 from the ink tank 96 to the circulation flow path 97 is opened on the bottom surface of the ink tank 96, and two inflow ports 99 from the circulation flow path 97 to the ink tank 96 are in contact with the liquid surface. In this configuration, since the ink spreads over the entire liquid surface from the two inflow ports 99, the air dissolved in the ink is easily removed, thereby improving the degassing efficiency.

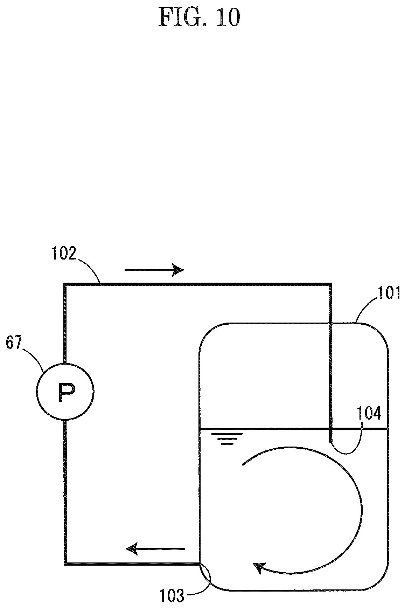

In the modified example 4 shown in FIG. 10, a side surface position near the bottom surface of an ink tank 101 and a submersed position slightly inserted into the liquid surface are communicated with each other by the circulation flow path 102. An inflow port 104 from the circulation flow path 102 to the ink tank 101 is positioned above an outflow port 103 from the ink tank 101 to the circulation flow path 102. Even in this configuration, the ink flow is generated in the ink tank 101, and the degassing efficiency is improved compared with the case where the ink is left unattended.

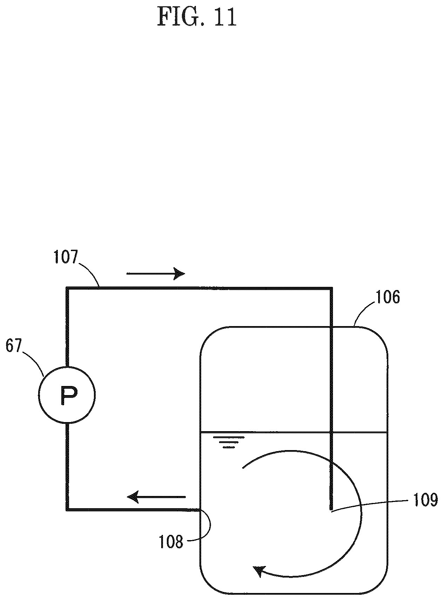

In the modified example 5 shown in FIG. 11, a side surface position of an ink tank 106 and a submersed position deeply inserted into the liquid surface are communicated with each other by a circulation flow path 107. An outflow port 108 from the ink tank 106 to the circulation flow path 107 and an inflow port 109 from the circulation flow path 107 to the ink tank 106 are positioned at substantially the same height. Even in this configuration, the ink flow is generated in the ink tank 106, and the degassing efficiency is improved compared with the case where the ink is left unattended.

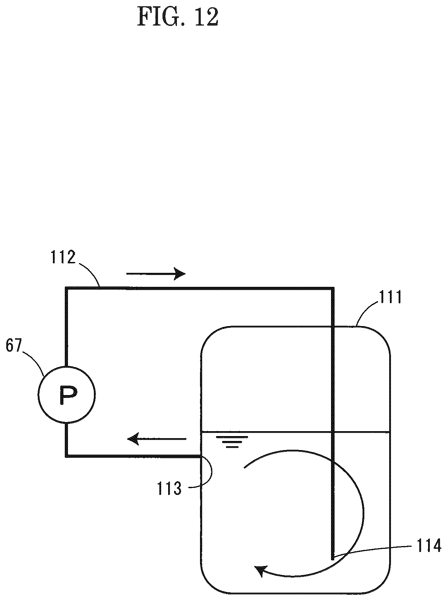

In the modified example 6 shown in FIG. 12, a side surface position near the liquid surface of an ink tank 111 and the submersed position more deeply inserted into the liquid surface are communicated with each other by a circulation flow path 112. An inflow port 114 from the circulation flow path 112 to the ink tank 111 is positioned lower than an outflow port 113 from the ink tank 111 to the circulation flow path 112. Even in such a configuration, the ink flows in the ink tank 111, and the ink near the liquid surface where an amount of dissolved air is small is sent, thereby improving the degassing efficiency.

Although the degassing device 40 provided in the inkjet recording apparatus 1 has been exemplified in this embodiment, the degassing device 40 can also be applied to apparatuses used in other fields such as semiconductor manufacturing fields and display manufacturing fields. That is, it can also be applied to degassing of chemical liquids, electrolytic liquids, liquid resins, adhesives, solvents, lubricating oils, liquid foods, beauty solutions, and the like, other than ink.

In the present embodiment, the pressure reducing pump 62 is exemplified as the pressure reducing device, but the pressure reducing device may be any device capable of pressure reducing the inside of the ink tank 32, for example, the pressure-reducing device may be an ejector.

In the present embodiment, the circulation pump 67 is exemplified as the circulation device, but the circulation device may be any device capable of circulating the ink through the circulation flow path 47, for example, the circulation device may be an ejector.

In the present embodiment, the pump shaft 73 of the circulation pump 67 and the motor shaft 75 are magnetically coupled, but if the ink leakage is suppressed, the pump shaft 73 of the circulation pump 67 and the motor shaft 75 may be mechanically coupled.

Further, in the present embodiment, the determination part 39 calculates the viscosity of the ink and the allowable time to determine whether the degassing operation is necessary, but in an environment where the viscosity of the ink does not change significantly, the calculation process of the viscosity of the ink and the allowable time may be omitted by appropriately setting the allowable time. The control device 38 may not be provided with the determination part 39.

In the present embodiment, the sheet may be a sheet-like object to form an image, for example, a plain paper, a coated paper, a tracing paper, or an OHP (Over Head Projector) sheet.

Although the present embodiment has been described, other embodiments may be wholly or partially combined with the above-described embodiments and modified examples.

The technique of the present disclosure is not limited to the above-described embodiments, and may be changed, replaced, or modified in various ways to the extent that it does not deviate from the purport of the technical idea. In addition, if the technical ideas can be realized in other ways by means of technological advances or other derived technologies, they may be implemented using those methods. Accordingly, the claims cover all embodiments that can be included within the scope of the technical thought.

## Claims

1.   An inkjet recording apparatus (1) comprising:

   an ink tank (32) in which ink is stored;
   a recording head (21) which ejects the ink supplied from the ink tank (32);
   a pressure reducing device (62) which reduces pressure in the ink tank (32);
   a circulation flow path (47) which communicates different positions of the ink tank (32);
   a circulation device (67) which circulates the ink through the circulation flow path (47), wherein
   the ink contains a white pigment.

2.   The inkjet recording apparatus (1) according to claim 1, wherein
   the white pigment is titanium oxide.

3.   The inkjet recording apparatus (1) according to claim 2, wherein
   an average primary particle diameter of the titanium oxide is 250 [nm] or more and 350 [nm] or less.

4.   The inkjet recording apparatus (1) according to claim 1, wherein
   the circulation device is a pump which delivers a liquid by a rotating body (74).

5.   The inkjet recording apparatus (1) according to claim 4, wherein
   the circulation device (67) is configured such that a power can be transmitted between a pump shaft (73) and a motor shaft (75) in a non-contact manner across a partition wall (77).

6. The inkjet recording apparatus (1) according to claim 5, wherein
the circulation device (67) is configured such that the power can be transmitted between the pump shaft (73) and the motor shaft (75) in a non-contact manner using a magnetic force.

7. The inkjet recording apparatus (1) according to claim 1, wherein
a viscosity of the ink is 2 [mPa·s] or more and 10 [mPa·s] or less.

FIG. 1

## FIG. 2

FIG. 3

FIG. 4

FIG. 5

FIG. 6

Related art

FIG. 7

FIG. 8

FIG. 9

FIG. 10

FIG. 11

FIG. 12

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/240406 A1 (LACAZE JOHN RANDEL [US] ET AL) 28 August 2014 (2014-08-28) * paragraphs [0008], [0025], [0026], [0054]; figures 1,2 * ----- | 1-7 | INV. B41J2/19 B41J2/18 B41J2/175 B41J2/195 C09D11/322 B41J2/21 |
| A | EP 4 257 365 A1 (FUJIFILM CORP [JP]) 11 October 2023 (2023-10-11) * paragraphs [0025], [0236]; figure 18 * ----- | 2,3 | |
| A | US 2017/182788 A1 (TOKIMATSU HIROYUKI [JP] ET AL) 29 June 2017 (2017-06-29) * paragraph [0053]; figure 4 * ----- | 7 | |

TECHNICAL FIELDS
SEARCHED     (IPC)

B41J

The present search report has been drawn up for all claims

| Place of search | Date of completion of the search | Examiner |
|---|---|---|
| The Hague | 17 December 2025 | Rousseau, Henri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 3951

This annex lists the patent family members relating to the patent documents cited in  the above-mentioned European search report.
The members are as contained in the European Patent Office EDP file on
The European Patent Office is in no way liable for these particulars which are merely given for the purpose of information.

17-12-2025

| Patent document cited in search report | | Publication date | Patent family member(s) | | Publication date |
|---|---|---|---|---|---|
| US 2014240406 | A1 | 28-08-2014 | EP | 2769847 A2 | 27-08-2014 |
| | | | ES | 2869435 T3 | 25-10-2021 |
| | | | JP | 6231401 B2 | 15-11-2017 |
| | | | JP | 2014162233 A | 08-09-2014 |
| | | | US | 2014240406 A1 | 28-08-2014 |
| EP 4257365 | A1 | 11-10-2023 | EP | 4257365 A1 | 11-10-2023 |
| | | | JP | 7781070 B2 | 05-12-2025 |
| | | | JP | WO2022118699 A1 | 09-06-2022 |
| | | | US | 2023302812 A1 | 28-09-2023 |
| | | | WO | 2022118699 A1 | 09-06-2022 |
| US 2017182788 | A1 | 29-06-2017 | CN | 106061745 A | 26-10-2016 |
| | | | EP | 3112172 A1 | 04-01-2017 |
| | | | JP | 6361727 B2 | 25-07-2018 |
| | | | JP | WO2015125542 A1 | 30-03-2017 |
| | | | US | 2017182788 A1 | 29-06-2017 |
| | | | WO | 2015125542 A1 | 27-08-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5030305 B

- JP 2019142189 A